(19) Europäisches Patentamt
European Patent Office
Office européen des brevets

(11) **EP 2 002 238 B1**

(12) **EUROPEAN PATENT SPECIFICATION**

(45) Date of publication and mention
of the grant of the patent:
**19.02.2014 Bulletin 2014/08**

(51) Int Cl.:
***G01N 21/55*** *(2006.01)*     ***G01N 21/35*** *(2006.01)*
***G01N 21/94*** *(2006.01)*

(21) Application number: **06790332.8**

(22) Date of filing: **05.10.2006**

(86) International application number:
**PCT/AU2006/001462**

(87) International publication number:
**WO 2007/098525 (07.09.2007 Gazette 2007/36)**

(54) **METHOD AND SYSTEM FOR THE MEASUREMENT OF CHEMICAL SPECIES IN CAUSTIC ALUMINATE SOLUTIONS**

VERFAHREN UND SYSTEM ZUR MESSUNG CHEMISCHER SPEZIES IN ALUMINATLAUGEN

PROCÉDÉ ET SYSTÈME DE MESURE D'ESPÈCES CHIMIQUES DANS DES SOLUTIONS D'ALUMINATE CAUSTIQUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.03.2006 AU 2006901074**

(43) Date of publication of application:
**17.12.2008 Bulletin 2008/51**

(73) Proprietor: **Central Chemical Consulting PTY Ltd. Malaga, WA 6090 (AU)**

(72) Inventors:
- **PATRICK, Vincent Andrew Duncraig, WA 6023 (AU)**
- **PATRICK, Cameron James Duncraig, WA 6023 (AU)**
- **KARAKYRIAKOS, Emmanuel Hamersley, WA 6022 (AU)**

(74) Representative: **Keen, Celia Mary et al J A Kemp 14 South Square Gray's Inn London WC1R 5JJ (GB)**

(56) References cited:
**US-A- 3 858 111**    **US-A- 3 858 111**
**US-A- 3 865 708**    **US-A- 5 378 320**
**US-A- 5 976 325**

- **ARMSTRONG J A ET AL: "Investigation of zeolite scales formed in the Bayer process", MICROPOROUS AND MESOPOROUS MATERIALS, ELSEVIER SCIENCE PUBLISHING, NEW YORK, US, vol. 41, no. 1-3, 1 December 2000 (2000-12-01), pages 89-97, XP004220835, ISSN: 1387-1811, DOI: DOI:10.1016/S1387-1811(00)00276-6**
- **BARNES M C ET AL: "A methodology for quantifying sodalite and cancrinite phase mixtures and the kinetics of the sodalite to cancrinite phase transformation", MICROPOROUS AND MESOPOROUS MATERIALS, ELSEVIER SCIENCE PUBLISHING, NEW YORK, US, vol. 31, no. 3, 1 November 1999 (1999-11-01), pages 303-319, XP004180936, ISSN: 1387-1811, DOI: DOI:10.1016/S1387-1811(99)00080-3**
- **EYER S.L.: 'Combining FTIR spectroscopy and multivariate calibration to locate mineable ore deposits' PAPER PUBLISHED IN LIGHT METALS, 1999 AIME (ANALYTICAL TECHNOLOGY IN THE MINERAL INDUSTRIES, THE MINERALS, METALS & MATERIALS SOCIET, 1999) XP008126005**
- **GERSON A.R. ET AL.: 'Bayer process plant scale: transformation of sodalite to cancrinite' JOURNAL OF CRYSTAL GROWTH vol. 171, 1997, pages 209 - 218, XP004057785**

**(Cont. next page)**

- **DATABASE WPI Week 199428, Derwent Publications Ltd., London, GB; Class E33, AN 1994-232066, XP003016847 & SOC ELECTROLYSE & CHIM ALCAN LTEE RESEARCH DISCLOSURE vol. 362, no. 013, 10 June 1994**

**Description**

**FIELD OF THE INVENTION**

The present invention relates to a method for the measurement of chemical species in caustic aluminate solutions. The method relates particularly but not exclusively to the measurement of main and impurity species in aluminate-bearing sodium hydroxide liquors such as Bayer process liquors. In addition, the method may be used for the measurement of Bayer process ratios, for example those known as TOC/TA, TC/TA, A/C, TOC/S and C/S.

**BACKGROUND OF THE INVENTION**

Caustic aluminate solutions containing a proportion of carbonate and other species are used in several industrial applications. For example, Bayer liquor is formed by the digestion of bauxitic materials in hot aqueous sodium hydroxide solutions, and is a key component in the Bayer processing technology used to produce alumina worldwide.

The measurement of the chemical species of hydroxide, carbonate, aluminate, sulfate and total organic carbon (TOC) concentrations in Bayer liquors is important for controlling the Bayer process. Knowledge of these parameters is necessary to keep Bayer liquors within set limits which maximises the efficiency of unit processes such as bauxite digestion, aluminium trihydroxide crystallisation, and depleted liquor causticisation. Information on the concentrations of these chemical species in Bayer liquors also provides a measurement of important component ratios, such as those commonly called C/S (total caustic: total alkalinity) or TC/TA (total caustic: total alkalinity) in the industry. A number of other important ratios can be calculated from a knowledge of the chemical species in Bayer liquor, including TOC/TA (total organic carbon: total alkalinity), and A/C (alumina: total caustic).

Several methods of Bayer liquor analysis are well known, particularly titration to the inflection point. These common methods each require several minutes to perform, require the liquor to be diluted, and utilise pH or other electrodes which are not suited to direct measurement in strongly caustic industrial liquors. In addition, the known methods usually require a separate analytical technique for the measurement of each species. These known methods also typically need several millilitres of solution for analysis, and commonly only give information on hydroxide, carbonate and aluminate concentration in the liquor. Information on TOC and sulfate is usually obtained through separate analyses, which takes additional resources and time. The strongly caustic nature of these industrial process liquors makes many conventional analytical techniques unsuitable.

Other prior art apparatus for measuring total caustic, total alkalinity and total alumina in Bayer liquors relies on low variability in liquor impurities for accurate readings. Therefore, if the concentration of liquor impurities varies away from the calibrated levels, inaccuracies arise in the measured concentrations of the chemical species. Furthermore, conventional analytical methods have often been unsuitable for analyses of Bayer process liquors due to the presence of complex organic species in these process liquors. Recently a Bayer liquor analyser apparatus that uses the liquor temperature, density, sound velocity, conductivity and maximum conductivity of the liquor under isothermal dilution for liquor analysis has been described by Dooley in PCT/AU2005/001029. The apparatus determines the total alumina, total caustic, total alkali and total concentration of impurities in a Bayer liquor. Whilst the invention by Dooley may be a useful advance in on-line monitoring using conductivity and so on, it has not replaced the conventional procedures for routine Bayer liquor analysis used in the alumina processing industry.

The technique of Fourier Transform Infra-red Spectroscopy (FTIR) has been used to examine the speciation of sodium aluminate in sodium hydroxide solutions (Watling et al.) and to measure the adsorption of quaternary ammonium compounds onto sodium oxalate under highly alkaline conditions (Hind et al.). However, it appears that there has been no attempt to use this technique for the routine quantitative analysis of chemical species in caustic aluminate solutions such as Bayer liquors.

The use of FTIR as a monitoring method for species such as hydroxide, carbonate and sulfate in Kraft industrial liquors devoid of aluminate species has been shown by Leclerc et al. in US patent 5378320. This earlier patent describes the use of FTIR as a direct monitoring and control method for hydroxide and carbonate in Kraft paper pulp liquors. It does not show that FTIR could be used for measurements in aluminate-bearing liquors, and does not show that accurate analyses can be carried out despite the common interfering species in caustic aluminate solutions.

Earlier patents and scientific literature do not appear to disclose that Fourier Transform Infra-red Spectroscopy Attenuated Total Reflectance (FTIR-ATR) is a practical method for the accurate and direct measurement of aluminate, hydroxide and carbonate in Bayer and other caustic aluminate liquors. The prior art does not appear to show that other co-existing liquor species such as sulfate and total organic carbon can be determined by FTIR-ATR in Bayer liquors. There appears to be no disclosure that aluminate, hydroxide, carbonate and sulfate can be simultaneously measured in the presence of the complex organic species common in Bayer process liquors with sufficient accuracy to be adopted as a routine method of analysis in the alumina industry.

The present invention aims to alleviate or at least partly alleviate one or more of the difficulties associated with the prior art.

References to prior art in this specification are provided for illustrative purposes only and are not to be taken as an admission that such prior art is part of the common general knowledge in Australia or elsewhere.

**SUMMARY OF THE INVENTION**

The present invention provides a method for quantitative measurement of a concentration of at least one chemical species present in a sample caustic aluminate solution, the method comprising the steps of:

a) measuring the infra-red transmission or absorption intensities at four or more frequencies in the range of about 400 $cm^{-1}$ to 6000 $cm^{-1}$ for a range of reference Bayer liquors, or for a range of caustic aluminate solutions with a known composition of said at least one chemical species;

b) forming a model which correlates the measured intensities at the four or more frequencies with the concentration of the at least one chemical species in the reference Bayer liquors or caustic aluminate solutions;

c) measuring the infra-red transmission or absorption intensities at four or more frequencies in the range of about 400 $cm^{-1}$ to 6000 $cm^{-1}$ for the sample Bayer liquor or caustic aluminate solution; and

d) calculating the concentration of the at least one chemical species in the sample Bayer liquor or caustic aluminate solution from the measured infra-red intensities of step c) by using the model of step b).

Preferably, the at least one chemical species is selected from the group consisting of aluminate, hydroxide, carbonate, alkali metal, silica, phosphate, chloride, sulphate and total organic carbon.

The method preferably uses statistical methods to form a multivariable model for correlating the measured intensities at the four or more frequencies with the concentration of the at least one chemical species.

The method may further comprise correlation using measured intensities, the rate of change of intensities (derivatives), or integrated areas from at least four infra-red wavelength regions selected from wavelengths within 11 $cm^{-1}$ of the following 64 spectral regions ($cm^{-1}$): 588, 602, 650, 680, 700, 710, 715, 720, 730, 740, 757, 763, 775, 790, 867, 884, 890, 910, 950, 1014, 1040, 1053, 1072, 1100, 1131, 1160, 1190, 1330, 1350, 1382, 1390, 1400, 1433, 1470, 1535, 1550, 1560, 1570, 1580, 1602, 1628, 1654, 1950, 1969, 2028, 2050, 2125, 2158, 2265, 2283, 2650, 2830, 2900, 2920, 3000, 3123, 3143, 3150, 3155, 3250, 3350, 3425, 3750, and 5350 $cm^{-1}$.

The method preferably comprises measuring infra-red intensities and their rates of change at not only the commonly known principal infra-red absorption regions for the at least one chemical species, but also at multiple wavelength regions which are not the recognised principal infra-red absorption regions for the at least one chemical species. These measurements accurately determine the at least one chemical species and aid in removing the effect of interfering chemical species. For example, the concentration of aluminate species affects the infra-red intensities in the main water (3800 $cm^{-1}$ to 3100 $cm^{-1}$) and hydroxide (3100 $cm^{-1}$ to 2500 $cm^{-1}$) regions of the spectrum. Sulfate and carbonate also affect the main water region and carbonate affects the hydroxide region. In this example, allowing for these additional effects on infra-red intensities assists in determining the concentration of the aluminate species, and also the concentration of the hydroxide species more accurately.

Preferably the sample caustic aluminate solution is a solution arising from the alumina industry. More preferably the caustic aluminate solution is an industrial or synthetic Bayer process liquor.

The method preferably further comprises the use of Fourier Transform Infra-red Spectroscopy (FTIR) to measure the infra-red transmission intensities.

More preferably the method uses FTIR attenuated total reflectance (FTIR-ATR) to measure the infra-red transmission intensities. The method may employ a single reflection ATR crystal or a multiple reflection ATR crystal. The method preferably employs the use of a suitable detector such as a MCT detector or DTGS detector. The method preferably includes a diamond crystal ATR attachment since this attachment is alkali resistant and robust to abrasion.

Preferably for an on-line processing application a portion of the caustic aluminate solution is sampled from a stream or side-stream of the processing equipment. Preferably the portion of caustic aluminate solution is pumped from the main process Bayer liquor stream, is allowed to cool, and is then clarified prior to quantitative determination of the chemical species of interest, such as aluminate, hydroxide, carbonate, sulfate and total organic carbon, using FTIR with a diamond crystal ATR attachment. Commercially available ATR probes (ART Photonics, Axiom Analytical, Mettler Toledo) could be inserted directly into a process stream for on-line processing applications.

Preferably the FTIR measurements are made at a constant convenient temperature, such as, but not limited to room temperature.

The method may further comprise the use of a statistical model through techniques such as partial least squares regression, principal component analysis or multiple regression which utilise intensities and the rate of change of intensities from at least four separate frequencies or frequency regions in the infra-red spectrum of 400 $cm^{-1}$ to 6000 $cm^{-1}$ to estimate one or more of the aluminate, hydroxide, carbonate, sulfate and total organic carbon (TOC) concentrations in the sample caustic aluminate solution. Some of these statistical techniques, such as linear regression and principal component analysis, may also be used to build mathematical models predicting properties of the spectrum, such as heights of peaks, from the concentration of species found in a caustic aluminate solution. The sample caustic aluminate solution may be either a prepared synthetic liquor or an industrial Bayer liquor. Development of a model based on synthetic liquors can be used for estimates of one or more of the aluminate, hydroxide, carbonate, sulfate and total organic carbon (TOC) concentrations in alumina processing streams such as industrial Bayer liquors.

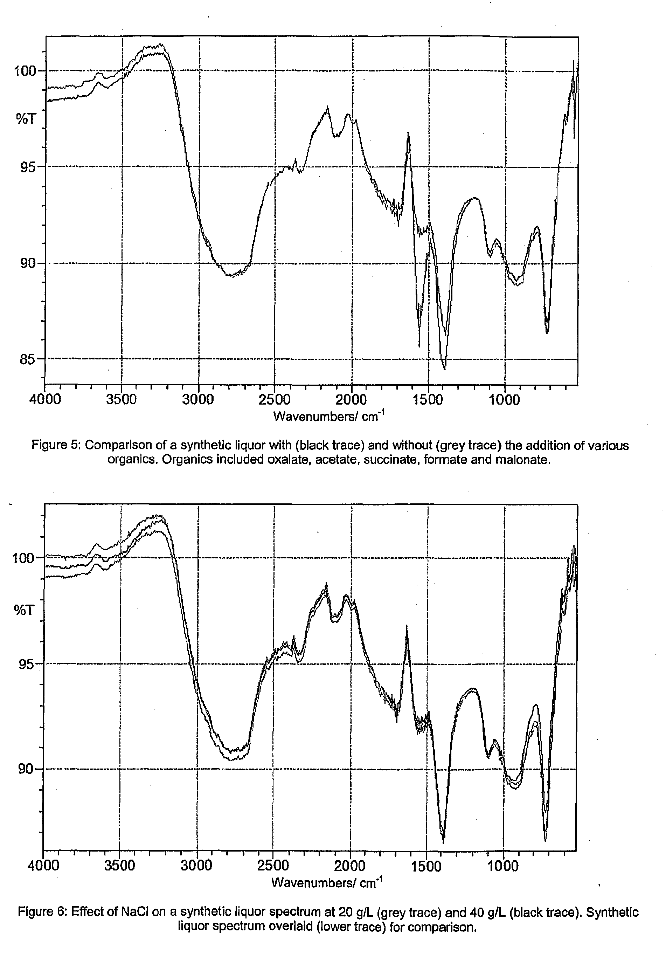

TOC can be represented in a synthetic liquor by the appropriate addition of organic acids or salts such as sodium acetate, sodium formate, sodium malonate, sodium succinate, sodium oxalate, humic acids, fulvic acids and so forth (see Figure 5). The current invention discloses that the large number of complex organic species present in a typical industrial Bayer liquor does not interfere in such a way to prevent the accurate measurement of aluminate, carbonate, hydroxide, sulfate and TOC.

The method may further separate out one or more groups of organic species if required, as described in step b) but with the application of intensities at additional wavelengths such as 640, 1315, 1700, 2713, 2953, 3277, and 3400 $cm^{-1}$.

The method may further model the effect of sodium chloride on the FTIR-ATR spectrum, especially at frequencies below 1000 $cm^{-1}$.

The method may further comprise the application of a model as described in step b) to correlate liquor species concentrations over a more restricted concentration range, or over a particular Bayer liquor type. Restriction of the range provides increased accuracy in the model.

As an alternative to the use of ATR, an FTIR transmission spectrum may be collected using a very thin sample of liquor to be analysed, such as liquid film. As a further alternative, the infra-red spectrum may be measured using specular reflectance from a surface coated with an aluminate-bearing liquor or Bayer liquor film.

The method may further include the step of using additional parameters such as temperature, conductivity, viscosity, refractive index, light absorption or sound attenuation of the caustic aluminate solution to assist in determination of concentrations of the chemical species in the caustic aluminate solution.

The method may further comprise the step of separating the sample caustic aluminate solution into soluble and insoluble components prior to analysis. This aspect of the invention has particular application where the solids interfere with the analysis. This separation step may be carried out by filtration or settling prior to step a) or c).

The method may further comprise adding a solvent to, or dilution of, the sample caustic aluminate solution prior to step a) or c).

Preferably laboratory based analysis is automated to allow a fast sample throughput. More preferably the laboratory based analysis would involve a mobile ATR probe with an automated carousel and sample delivery system, or a fixed ATR crystal with an automated carousel and a mobile sample delivery and cleaning system. The automated steps may include (1) rinsing the FTIR-ATR crystal and associated chamber with deionised water, (2) removing the water and drying the FTIR-ATR crystal and associated chamber, (3) pre-rinsing the FTIR-ATR crystal and associated chamber with the sample caustic aluminate solution, (4) removing the pre-rinse, (5) placing a clean sample of the sample caustic aluminate solution in the FTIR-ATR ready for analysis.

In accordance with a further aspect of the present invention, there is provided a system for quantitative measurement of a concentration of at least one chemical species present in a sample caustic aluminate solution, the system comprising:

a) means for measuring the infra-red transmission or absorption intensities at four or more frequencies in the range of about 400 cm to 6000 $cm^{-1}$ for a range of reference Bayer liquors, or for a range of caustic aluminate solutions having a known composition of said at least one chemical species;

b) a microprocessor programmed with a statistical model which correlates the measured intensities at the four or more frequencies with the concentration of the at least one chemical species on the reference Bayer liquors or caustic aluminate solutions;

c) means for measuring the infra-red transmission or absorption intensities at four or more frequencies in the range of about 400 $cm^{-1}$ to 6000 $cm^{-1}$ for the sample Bayer liquor or caustic aluminate solution; and

d) means for calculating the concentration of the at least one chemical species in the sample Bayer liquor or caustic aluminate solution from the measured infra-red intensities by using said model.

Preferably, the at least one chemical species is selected from the group consisting of aluminate, hydroxide, carbonate, alkali metal, silica, phosphate, chloride, sulphate and total organic carbon.

According to a further aspect of the present invention, there is provided a method of controlling a Bayer process wherein concentration of at least one chemical species is measured using the method or system referred to above, said concentration being used as a control parameter for the Bayer process.

References to measurement of infra-red transmission intensities are to be understood to include the technique of measuring the rate of change of the intensities and integrated areas of the peaks in the infra-red spectra.

Throughout the specification, unless the context requires otherwise, the word "comprise" or variations such as "comprises" or "comprising", will be understood to imply the inclusion of a stated integer or group of integers but not the exclusion of any other integer or group of integers. Likewise the word "preferably" or variations such as "preferred", will be understood to imply that a stated integer or group of integers is desirable but not essential to the working of the invention.

### BRIEF DESCRIPTION OF THE DRAWINGS

The nature of the invention will be better understood from the following detailed description of several specific embodiments of the invention, given by way of example only, with reference to the accompanying figures, in which:

Figure 1 is an infra-red spectrum of sodium hydroxide solutions illustrating peak intensities in different regions;
Figure 2 is an infra-red spectrum of aluminate concentrations in sodium hydroxide solutions;
Figure 3 is an infra-red spectrum of sodium carbonate concentrations in sodium hydroxide solutions;
Figure 4 is an infra-red spectrum of sodium sulfate concentrations in sodium hydroxide solutions;
Figure 5 shows the infra-red spectra of synthetic liquors with and without the addition of various organics;
Figure 6 shows the infra-red spectra of synthetic liquors after 20 g/L and 40 g/L sodium chloride addition;
Figure 7 shows the infra-red spectra of sodium hydroxide solutions before and after addition of 40 g/L sodium chloride; and
Figure 8 is an infra-red spectrum of a Bayer process liquor.

### DESCRIPTION OF PREFERRED EMBODIMENT

Steps 1-6 below indicate stages in the preferred embodiment of building the model for the BLAIR system. Steps 7-8 indicate the stages in a routine analysis after the model has been built.

1. Determine the accuracy and range criteria for the required analysis.
2. Establish an appropriate set of accurately analysed reference liquors using a factorial design or other rational statistical procedures. The number of reference liquors required in the set will depend on the accuracy of the reference liquors, the accuracy required in the final model, and the range of component concentrations in the future routine analysis.
3. Measure the infra-red spectra of the reference liquors.
4. Collect information on intensities from the above infra-red spectra in the important 64 frequency regions, and calculate appropriate functions, integrated averages, and slopes derived from those frequency regions.
5. For each of the aluminate, hydroxide, carbonate, sulfate, and TOC components, build a regression equation correlating each component species concentration with a combination of the statistically significant data from the important 64 frequency regions. The data of the statistically significant regions includes appropriate functions, integrated averages and slopes from these regions.
6. Write or use a computer programme to read the infra-red spectrum, process the data using the 64 important frequency regions, and apply the model regression equations (from step 5) to determine each component concentration (aluminate, hydroxide, carbonate, sulfate, and TOC). The computer programme optionally applies an algorithm to check for the expected consistency between species, and optionally uses selected sub-models with enhanced accuracy for different ranges of component concentration. The computer programme calculates the required Bayer ratios such as TC/TA, C/S, A/C, TOC/TA, and so forth from the component concentrations. The computer programme finally displays the results. This is to be used in step (8.) for routine analysis.
7. After measuring a background spectrum using water, measure the infra-red spectrum of an unknown sample under the same conditions as used for the model development, preferably using a diamond crystal FTIR-ATR.
8. Provide the infra-red spectrum of the unknown sample as input to the computer code developed in step (6.), and read the results.

In the preferred embodiment, steps 7 and 8 above will be automated.
In a preferred embodiment of the invention, FTIR-ATR spectra are measured at 4 cm$^{-1}$ resolution in the range of 400 cm$^{-1}$ to 6000 cm$^{-1}$ for a number of reference Bayer liquors or for a number of caustic aluminate solutions with known composition (here called 'reference liquors'). The component concentrations in the reference liquors are selected to encompass the range and combinations of components in the samples to be analysed later. The component concentrations in the reference liquors are selected to allow for the statistical determination of main and interaction effects, so that the influence of one component on the measurement of another is known. The selection of suitable reference samples for the development of a reliable statistical model can be made using factorial designs, and this is fully described elsewhere [see, for example: "Statistics for Experimenters", G.E.P. Box, W.G. Hunter, and J.S. Hunter, Wiley 1978, ISBN 0-471-09315-7]

The reference liquors or solutions are measured under the same conditions and with the same infra-red instrumentation and accessories which are to be used later for the BLAIR determination of unknown samples. Similarly, the same mathematical treatment of data such as smoothing or a correction for water and carbon dioxide absorbance is used for both the reference liquors and the BLAIR determination of unknown samples. In each measurement of the reference liquors, care is taken to allow for changes in the infra-red background which can occur over time.

The infra-red spectra from a set of 200 or more accurately analysed reference liquors is collected to produce a satisfactory model over the normal operating range for full strength Bayer liquors. The exact number of reference Bayer liquors or known caustic aluminate solutions required to develop the model will depend on the accuracy of knowledge of the composition of the reference liquors, the range of concentrations to be measured by the model, and the predictive accuracy required in the model. The reference sample data set used to develop the model is comprised of either synthetic caustic aluminate liquors (which may be prepared from aluminium metal, sodium hydroxide, sodium carbonate, sodium chloride, sodium sulphate, sodium silicate, sodium phosphate, sodium formate, sodium acetate, sodium malonate, sodium succinate, sodium oxalate, commercial humic acid, and other organic species as required), or accurately analysed Bayer liquors, or both synthetic and industrial Bayer liquors of known composition.

The intensities of the FTIR-ATR spectra are measured in the range of 400 cm$^{-1}$ to 6000 cm$^{-1}$, and the infra-red data obtained from the FTIR instrument at the 64 frequency regions previously described are used as input for a computer calculation of averages for each of the 8 cm$^{-1}$ regions, and smoothed slopes or approximated derivatives for each of the 8 cm$^{-1}$ regions.

One or more multiple regression models are developed based on functions of the measured infra-red intensities, their integrated areas and their derivatives. Model development is carried out using available statistical software such as 'R' [http://www.r-project.org/], in particular retaining those infra-red intensities and their functions which are statistically significant predictors. The models are compared using adjusted $r^2$ or other statistical measures until a model of suitable accuracy is obtained. In this way, independent species models are developed using multiple regression to correlate the measured intensities of the statistically significant data from the 64 frequency regions measured with the concentration of the aluminate, hydroxide, carbonate, sulfate and total organic carbon in the reference solutions. The spectra may be measured at more than 64 frequency regions if appropriate, although this is not normally required.

After a suitable set of model equations has been determined, a computer or a microprocessor is used to automate the processing of infra-red spectra, and calculate the BLAIR results for unknown samples.

In one implementation of a laboratory-based analysis, a portion of 20 microlitres of sample caustic aluminate solution in the form of Bayer liquor is placed on the surface of a clean single reflection diamond ATR crystal.

The FTIR-ATR infra-red spectrum is measured, and from this spectrum the FTIR-ATR transmission intensity, derivative, or integrated area is recorded near the following 64 spectral regions (given in cm$^{-1}$): 588, 602, 650, 680, 700, 710, 715, 720, 730, 740, 757, 763, 775, 790, 867, 884, 890, 910, 950, 1014, 1040, 1053, 1072, 1100, 1131, 1160, 1190, 1330, 1350, 1382, 1390, 1400, 1433, 1470, 1535, 1550, 1560, 1570, 1580, 1602, 1628, 1654, 1950, 1969, 2028, 2050, 2125, 2158, 2265, 2283, 2650, 2830, 2900, 2920, 3000, 3123, 3143, 3150, 3155, 3250, 3350, 3425, 3750, and 5350 cm$^{-1}$.

Various initial processing steps may be applied to the FTIR spectrum before the statistical modelling takes place. These steps may include noise reduction algorithms such as moving average or median, and a numerical approximation of the derivative (rate of change) of the spectrum based on the slope between points. These steps may be repeated multiple times, allowing, for example, the second derivative (rate of change of the rate of change) to be computed.

The infra-red signal intensities at each of these regions are then placed into the mathematical model which correlates a number of the signal intensities with the chemical species in the Bayer liquor. The mathematical model can be developed in a manner familiar to those who are skilled in statistical techniques, using common methods such as linear, or non-linear regression techniques and principal component analysis. For example, in one implementation, aluminate concentrations as alumina ($Al_2O_3$) in g/L can be given by the equation:

$$Al_2O_3 = A*ddp1382 + B*ddp1470 + C*dp1072 + D*dp1354 + E*dp2283$$
$$+ F*dp2900 + G*dp867 + H*dp757 + J*p1040 + K*p1072 + L*p1131 + M*p1400$$
$$+ N*p1550 + P*p1560 + R*p1570 + S*p1950 + T*p2050 + U*p2650 + V*p2830$$
$$+ W*p2920 + X*p710 + Z*p730 + AA*p910 + BB*p950$$

In the above equation, pXXXX, dpXXXX and ddpXXXX preferably represent the average intensity (100 - percent transmittance), first derivative and second derivative respectively of a small (approximately 8 cm$^{-1}$) spectral band measured at the infra-red frequency of XXXX cm$^{-1}$. A, B, C, etc. represent statistically determined values, which will vary depending on the instrument, sampling accessories and range of liquor concentrations used.

In the above example equation, the statistically determined values of the above equation are as in Table 1 below. It should be understood however, that these values are but one example and are intended to be varied as required.

**Table 1. - Representative Example of Statistically Determined Values**

| Statistically Determined Value | Numerical Value |
|---|---|
| A | -1516.156 |
| B | 5624.656 |
| C | 139.943 |
| D | -513.5 |
| E | -22.01 |
| F | 1057.148 |
| G | 512.926 |
| H | 72.192 |
| J | -6.595 |
| K | 4.029 |
| L | -6.55 |
| M | 3.916 |
| N | 2.754 |
| P | 3.312 |
| R | -10.602 |
| S | -10.806 |
| T | 10.001 |
| U | -11.487 |
| V | 37.536 |
| W | -25.981 |
| X | 3.145 |
| Z | 1.305 |
| AA | 9.166 |
| BB | -3.394 |

There are many variants of the model equations, and skilled practitioners will be aware that several slightly different mathematical models may be used to similarly represent a correlation between the spectral intensities and the liquor components. Further examples of an implementation of aluminate concentrations as alumina ($Al_2O_3$) in g/L may be given by either of the following equations:

$$Al_2O_3 = 4.233*p710 + 10.59*p910 - 11.16*p950 - 4.616*p1190 + 0.9494*p1550 + 2.316*p2830 - 4.524*p3150 + 3.166*p3250 + 0.2034*(p710 * p950) - 0.1847*(p710 * p1570) + 0.0948*(p650 * p3250)$$

or

$$Al_2O_3 = 2.202*p700 + 5.783*p720 + 17.42*p910 - 25.46*p950 + 4.506*p1350 + 3.300*p1550 - 5.962*p1570 - 7.330*p2650 + 11.15*p2830 - 3.385*p3155 + 59.90*dp588 - 124.2*dp680 + 579.0*dp867 + 582.1*dp885 - 37.14*dp1131 - 234.8*dp1354 - 112.5*dp2283 + 351.3*dp3155 + 153.8*dp3425 + 1137*ddp602 - 11640*ddp3212 - 289.2*(dp1354)^2 - 0.1006*(p700 * p1570)$$

It is therefore shown that the equation, frequencies and statistically determined values may be varied depending on variations in one or more of the above listed variables of instrument, sampling accessory, liquors used and so forth.

The correlation or model equations also depend among other things on the instrument, the conditions of measurement, and the particular ATR crystal if an ATR accessory is used. Therefore, standardisation of the laboratory procedure will allow a common mathematical model to be used across several laboratories or processing sites.

To improve accuracy, different model equations may be used for different ranges of values. For example, one model equation may be more accurate for solutions with a low alumina content (for example, A < 75 g/L) while another may be more accurate for concentrated alumina solutions; and similarly for other variables being measured. Software may automatically select between two or more specialised model equations based on an initial estimate from a general model.

Models can also be derived for particular process liquor types, particular process streams, or for particular sections of a Bayer liquor circuit. In such instances, liquor or solution may be sampled from different sections of the process or plant and each sample separately analysed. This advantageously allows for improved precision and accuracy within the more limited liquor range, particularly as it is known that liquor sampled from such different sections can vary slightly in composition. As such, the model and equation used in analysis may require variation for each separate sample in order to ensure optimal accuracy of the analysis. In an on-line application, such sampling can make the BLAIR measurement and analysis more sensitive to changes in the liquor stream.

Some of the parameters being modelled are mathematically correlated by their definition: for example, TC (total caustic) is a linear combination of sodium hydroxide concentration and aluminate concentration. It is possible to make use of these relationships, either to derive alternate values for some species as a check, or to avoid the need for statistical models for all parameters.

Many different crystal types may be used as the ATR crystal, but a diamond ATR crystal is preferred because it is alkali resistant and robust to abrasion. The ATR crystal may be a multiple reflection ATR crystal as an alternative to a single reflection crystal.

The current invention discloses that improved FTIR measurement of aluminate, sulfate, hydroxide, carbonate and total organic carbon (TOC) can be obtained by consideration of not only the areas or intensities of a species' major peaks, but also the effect a species has on transmission intensities in other areas of the infra-red region.

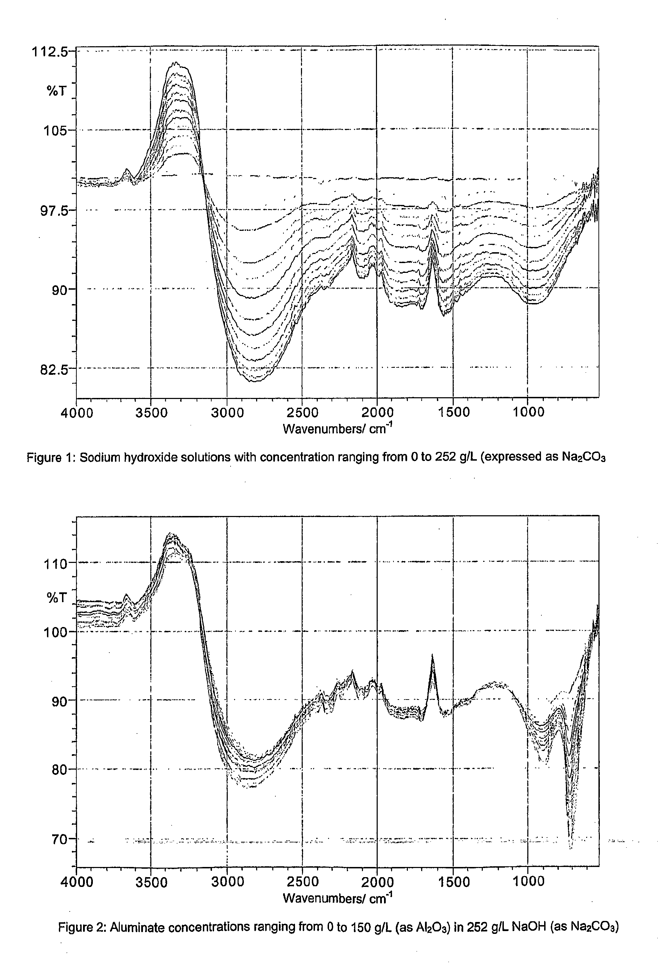

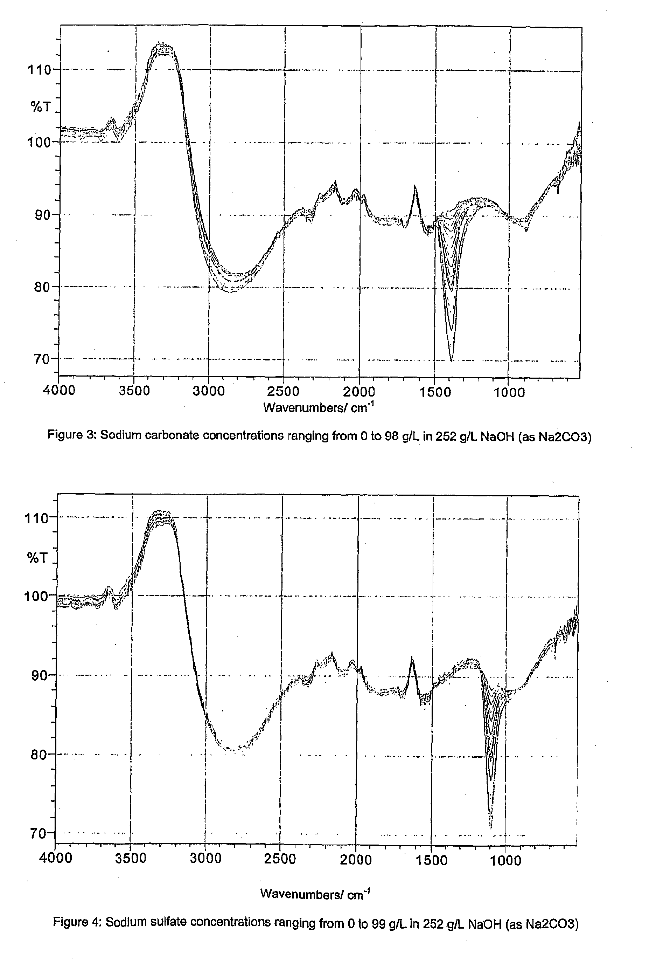

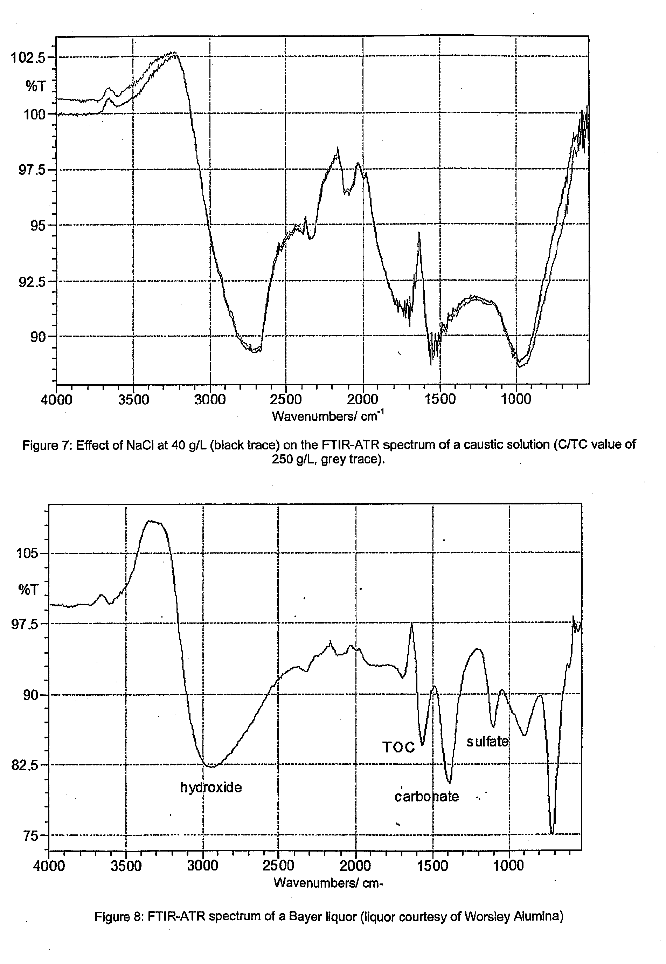

For example, sodium hydroxide concentration affects infra-red transmission intensities across the spectrum (see Figure 1). The concentration of aluminate species affects the shape, wavelength and peak height of the transmission features in the main water (3800 cm$^{-1}$ to 3100 cm$^{-1}$) and hydroxide (3100 cm$^{-1}$ to 2500 cm$^{-1}$) regions (see Figure 2). Similarly, the concentrations of sodium carbonate and sodium sulfate affect the water and hydroxide regions and have subtle effects in the infra-red regions at less than 1000 cm$^{-1}$ (see Figure 3 and Figure 4). As well as aluminate, sulfate, hydroxide, carbonate and total organic carbon (TOC), the FTIR spectrum is affected by sodium chloride. Concentrations of sodium chloride have an effect in the infra-red regions at less than 1000 cm$^{-1}$ (see Figure 6 and Figure 7).

In a preferred implementation of the invention, an initial calibration of the spectrum-species correlation is carried out in order to obtain optimal accuracy in the results. A further refinement to the measurements is suggested by correlating the infra-red spectra with liquors containing species in a particular range of interest, or by correlating the infra-red spectra with liquors from a particular plant.

A further application of the invention is to use FTIR with a diamond crystal ATR probe attachment to obtain rapid on-line measurements of aluminate, hydroxide, carbonate, sulfate, and total organic carbon (TOC) from a process stream, side-stream, or vessel. The measurement of aluminate, hydroxide and carbonate can be simply converted to the common industry measurements of total alkalinity (TA or S), total caustic (TC or C) and alumina (A). Figure 8 shows the FTIR-ATR spectrum of an industrial Bayer liquor. In an on-line implementation, inclusion of other variables such as temperature and electrical conductivity may be used to enhance the accuracy of the predictive model.

An alternative implementation of the invention is to collect an FTIR transmission spectrum using a very thin sample of the liquor to be analysed, such as a liquid film, in place of using FTIR-ATR. A further implementation of the invention is to measure the infra-red spectrum using specular reflectance from a surface coated with an aluminate-bearing liquor or Bayer liquor film.

Example results from applying the invention are given in Table 2, which shows the correlation between FTIR results of the invention for Bayer process liquor samples and results obtained from conventional liquor analysis. Other results included in Table 2 are for synthetic Bayer liquors, in which the components are known from the preparative quantities of the chemicals used in the liquor synthesis. For the statistical models, the adjusted $r^2$ is greater than 0.995 for all of the modelled species.

**Table 2: FTIR-ATR Model Concentrations for Several Synthetic and Process Bayer Liquors**

| Bayer Liquor Sample | $Al_2O_3$ (g/L) | | C (g/L) | | S (g/L) | |
|---|---|---|---|---|---|---|
| | reference | FTIR | reference | FTIR | reference | FTIR |
| Bayer Process Liquor A | 95.3 | 95.1 | 143.3 | 137.8 | 174.8 | 168.8 |
| Bayer Process Liquor B | 105.4 | 106.7 | 155.7 | 155.4 | 188.7 | 189.3 |
| Bayer Process Liquor C | 135.7 | 136.2 | 246.7 | 256.7 | 283.2 | 290.6 |
| Synthetic Bayer Liquor A | 62.2 | 62.2 | 329.6 | 328.3 | 369.6 | 368.7 |
| Synthetic Bayer Liquor B | 75 | 75.2 | 227.9 | 230.4 | 267.9 | 268.3 |
| Synthetic Bayer Liquor C | 125 | 123.3 | 279.9 | 279.8 | 299.9 | 298.9 |

| | OH (g/L) | | $CO_3$ (g/L) | | $SO_4$ (g/L) | |
|---|---|---|---|---|---|---|
| | reference | FTIR | reference | FTIR | reference | FTIR |
| Bayer Process Liquor A | 44.3 | 32.2 | 31.5 | 32.1 | 18.3 | 18.7 |
| Bayer Process Liquor B | 46.2 | 35.6 | 33.0 | 33.6 | 19.8 | 20.2 |
| Bayer Process Liquor C | 105.7 | 113.4 | 36.5 | 34.8 | 23.4 | 22.4 |
| Synthetic Bayer Liquor A | 265.0 | 263.6 | 40.0 | 38.6 | 35.0 | 34.8 |
| Synthetic Bayer Liquor B | 150.0 | 152.2 | 40.0 | 39.8 | 30.0 | 30.1 |
| Synthetic Bayer Liquor C | 150.0 | 150.5 | 20.0 | 19.9 | 10.0 | 10.4 |

| | C/S | | A/C | | TOC (g/L) | |
|---|---|---|---|---|---|---|
| | reference | FTIR | reference | FTIR | reference | FTIR |
| Bayer Process Liquor A | 0.820 | 0.816 | 0.665 | 0.690 | 13.1 | 13.4 |
| Bayer Process Liquor B | 0.825 | 0.821 | 0.677 | 0.687 | 14.1 | 14.5 |
| Bayer Process Liquor C | 0.871 | 0.883 | 0.550 | 0.531 | 17.2 | 16.9 |
| Synthetic Bayer Liquor A | 0.189 | 0.189 | 0.892 | 0.891 | 0 | -0.3 |
| Synthetic Bayer Liquor B | 0.329 | 0.327 | 0.851 | 0.859 | 0 | 0.1 |
| Synthetic Bayer Liquor C | 0.447 | 0.441 | 0.933 | 0.936 | 0 | 0.1 |

The invention is of particular application as a laboratory technique or a process technique for measuring the soluble chemical species in industrial Bayer liquors, and may also be used to provide information on aluminium trihydroxide or other solids in the liquor. Where only concentrations of the soluble components of a liquor are required, the liquor can be clarified by filtration or settling prior to measurement. The invention also finds particular and advantageous applications for rapid on-line measurement and analysis, permitting analysis of small samples of liquor or solution without necessitating dilution of the sample prior to analysis. This can effectively permit substantially continuous sampling, measurement and analysis of solution or liquor samples from various locations or points in a process or plant.

Now that preferred embodiments of the method of measurement of concentrations of chemical species in aluminate-containing caustic solutions have been described, it will be apparent that the method provides a number of advantages over the prior art, including the following:

i) The method of the invention allows for the simultaneous and rapid measurement of chemical species such as aluminate, hydroxide, carbonate, sulfate, and total organic carbon in Bayer process liquors.
ii) The method of the invention allows for the measurement of these chemical species in the presence of complex organic species in Bayer process liquors.
iii) The method may be carried out on a small sample of process liquor without the need for dilution of the liquor so that the method is suitable for rapid, on-line measurements.

It will be readily apparent to persons skilled in the relevant art that various modifications and improvements may be made to the foregoing embodiments, in addition to those already described, without departing from the basic inventive concepts of the present invention. Therefore, it will be appreciated that the scope of the invention is not limited to the specific embodiments described.

**Claims**

1. A method for quantitative measurement of a concentration of at least one chemical species present in a sample caustic aluminate solution, the method being **characterized by** the steps of:

   a) measuring the infra-red transmission or absorption intensities at four or more frequencies in the range of about 400 $cm^{-1}$ to 6000 $cm^{-1}$ for a range of reference Bayer liquors, or for a range of caustic aluminate solutions with a known composition of said at least one chemical species;
   b) forming a model which correlates the measured intensities at the four or more frequencies with the concentration of the at least one chemical species in the reference Bayer liquors or caustic aluminate solutions;
   c) measuring the infra-red transmission or absorption intensities at four or more frequencies in the range of about 400 $cm^{-1}$ to 6000 $cm^{-1}$ for the sample Bayer liquor or caustic aluminate solution; and
   d) calculating the concentration of the at least one chemical species in the sample Bayer liquor or caustic aluminate solution from the measured infra-red intensities of step c) by using the model of step b).

2. The method of claim 1 wherein the at least one chemical species is selected from the group consisting of aluminate, hydroxide, carbonate, alkali metal, silica, phosphate, chloride, sulphate and total organic carbon.

3. The method according to claim 1 or 2, wherein correlation of the measured intensities with the concentration of the at least one chemical species in the reference liquor or solution is calculated using a rate of change of the intensities or integrated areas from at least four infra-red wavelength regions having predetermined wavelengths.

4. The method according to claim 3, wherein the predetermined wavelengths are selected from wavelengths within 11 $cm^{-1}$ of one or more of the following spectral regions ($cm^{-1}$): 588, 602, 650, 680, 700, 710, 715, 720, 730, 740, 757, 763, 775, 790, 867, 884, 890, 910, 950, 1014, 1040, 1053, 1072, 1100, 1131, 1160, 1190, 1330, 1350, 1382, 1390, 1400, 1433, 1470, 1535, 1550, 1560, 570, 1580, 1602, 1628, 1654, 1950, 1969, 2028, 2050, 2125, 2158, 2265, 2283, 2650, 2830, 2900, 2920, 3000, 3123, 3143, 3150, 3155, 3250, 3350, 3425, 3750, and 5350 $cm^{-1}$.

5. The method according to any one of claims 2 to 4, wherein one or more groups of species are measured as in step b) with the application of intensities at additional wavelengths, selected from 640, 1315, 1700, 2713, 2953, 3277 and 3400 $cm^{-1}$.

6. The method according to any one of claims 2 to 5, wherein the infra red intensities or their rates of change are measured at infra-red absorption regions characterised for the at least one chemical species and at multiple wavelength regions that are not characteristic of principal infra-red absorption regions for the at least one chemical species.

7. The method according to any one of claims 1 to 6, wherein the model for correlating measured intensities with the concentration of the at least one chemical species is a statistical model.

8. The method according to claim 7, wherein the model is a multivariable model and uses one ore more statistical techniques selected from partial least squares regression, principal component analysis or multiple regression.

9. The method according to any one of the preceding claims, wherein the model of step b) is applied to correlate liquor or solution species over a restricted concentration range or over a specific Bayer liquor type.

10. The method according to any one of claims 1 to 9, comprising Fourier Transform Infra-Red Spectroscopy (FTIR) to measure the infra-red transmission intensities.

11. The method according to claim 10, wherein the FTIR used is FTIR attenuated total reflectance (FTIR-ATR) utilising a diamond crystal ATR attachment to measure the infra-red transmission frequencies.

12. The method according to any one of the preceding claims, wherein one or more additional parameters, selected from the group consisting of temperature, conductivity, viscosity, refractive index, light absorption or sound attenuation of the solution or liquor are used to assist in determining concentrations of the chemical species.

13. The method according to any one of the preceding claims, wherein the method is applied to on-line processing.

14. The method according to claim 13, wherein the portion of solution or liquor is pumped from a main process Bayer liquor stream, cooled and clarified prior to quantitative determination of the or each chemical species.

15. The method according to claim 14, wherein the analysis utilises a fixed FTIR-ATR crystal with an automated carousel, and a mobile sample delivery and cleaning system.

16. A system for quantitative measurement of a concentration of at least one chemical species present in a sample caustic aluminate solution, **characterized by**

a) means for measuring the infra-red transmission or absorption intensities at four or more frequencies in the range of about 400 cm$^{-1}$ to 6000 cm$^{-1}$ for a range of reference Bayer liquors, or for a range of caustic aluminate solutions having a known composition of said at least one chemical species;
b) a microprocessor programmed with a statistical model which correlates the measured intensities at the four or more frequencies with the concentration of the at least one chemical species in the reference Bayer liquors or caustic aluminate solutions;
c) means for measuring the infra-red transmission or absorption intensities at four or more frequencies in the range of about 400 cm$^{-1}$ to 6000 cm$^{-1}$ for the sample Bayer liquor or caustic aluminate solution; and
d) d) means for calculating the concentration of the at least one chemical species in the sample Bayer liquor or caustic aluminate solution from the measured infra-red intensities by using said model.

17. A method of controlling a Bayer process wherein concentration of at least one chemical species is measured using the method of any one of claims 1 to 16 or the system of claim 16, said concentration being used as a control parameter for the Bayer process.

**Patentansprüche**

1. Verfahren zur quantitativen Messung einer Konzentration wenigstens einer chemischen Spezies die in einer Probe kaustischer Aluminatlösung vorliegt, wobei das Verfahren durch die folgenden Schritte gekennzeichnet ist:

a) Messen der Infrarottransmissions- oder -absorptionsintensitäten bei vier oder mehr Frequenzen im Bereich von etwa 400 cm$^{-1}$ bis 6000 cm$^{-1}$ für einen Bereich von Referenz-Bayer-Flüssigkeiten oder für einen Bereich kaustischer Aluminatlösungen mit einer bekannten Zusammensetzung der wenigstens einen chemischen Spezies;
b) Bilden eines Modells, das die gemessenen Intensitäten bei den vier oder mehr Frequenzen mit der Konzentration der wenigstens einen chemischen Spezies in den Referenz-Bayer-Flüssigkeiten oder kaustischen Aluminatlösungen in Korrelation bringt;
c) Messen der Infrarottransmissions- oder -absorptionsintenstitäten bei vier oder mehr Frequenzen im Bereich von etwa 400 cm$^{-1}$ bis 6000 cm$^{-1}$ für die Probe der Bayer-Flüssigkeit oder die Probe kaustischer Aluminatlösung und
d) Berechnen der Konzentration der wenigstens einen chemischen Spezies in der Probe der Bayer-Flüssigkeit oder der kaustischen Aluminatlösung aus den gemessenen Infrarotintensitäten von Schritt c) unter Verwendung des Modells von Schritt b).

2. Verfahren nach Anspruch 1, wobei die wenigstens eine chemische Spezies ausgewählt wird aus der Gruppe, bestehend aus Aluminat, Hydroxid, Carbonat, Alkalimetall, Siliciumdioxid, Phosphat, Chlorid, Sulfat und gesamtem organischen Kohlenstoff.

3. Verfahren nach Anspruch 1 oder 2, wobei die Korrelation der gemessenen Intensitäten mit der Konzentration der wenigstens einen chemischen Spezies in der Referenzflüssigkeit oder -lösung unter Verwendung einer Änderungsrate der Intensitäten oder integrierten Flächen aus wenigstens vier Infrarotwellenlängenregionen, die vorbestimmte Wellenlängen haben, errechnet wird.

**4.** Verfahren nach Anspruch 3, wobei die vorbestimmten Wellenlängen aus Wellenlängen innerhalb von 11 cm$^{-1}$ eines oder mehrerer der folgenden Spektralregionen (cm$^{-1}$) ausgewählt werden: 588, 602, 650, 680, 700, 710, 715, 720, 730, 740, 757, 763, 775, 790, 867, 884, 890, 910, 950, 1014, 1040, 1053, 1072, 1100, 1131, 1160, 1190, 1330, 1350, 1382, 1390, 1400, 1433, 1470, 1535, 1550, 1560, 1570, 1580, 1602, 1628, 1654, 1950, 1969, 2028, 2050, 2125, 2158, 2265, 2283, 2650, 2830, 2900, 2920, 3000, 3123, 3143, 3150, 3155, 3250, 3350, 3425, 3750 und 5350 cm$^{-1}$.

**5.** Verfahren nach einem der Ansprüche 2 bis 4, wobei eine Gruppe oder mehrere Gruppen von Spezies wie in Schritt b) mit der Anwendung von Intensitäten bei zusätzlichen Wellenlängen, ausgewählt aus 640, 1315, 1700, 2713, 2953, 3277 und 3400 cm$^{-1}$, gemessen werden.

**6.** Verfahren nach einem der Ansprüche 2 bis 5, wobei die Infrarotintensitäten oder ihre Änderungsraten in Infrarotabsorptionsregionen, die für die wenigstens eine chemische Spezies charakterisiert sind, und in mehreren Wellenlängenregionen, die keine charakteristischen Hauptinfrarotabsorptionsregionen für die wenigstens eine chemische Spezies sind, gemessen werden.

**7.** Verfahren nach einem der Ansprüche 1 bis 6, wobei das Modell zum Korrelieren gemessener Intensitäten mit der Konzentration der wenigstens einen chemischen Spezies ein statistisches Modell ist.

**8.** Verfahren nach Anspruch 7, wobei das Modell ein Multivariablen-Modell ist und eine statistische Technik oder mehrere statistische Techniken, ausgewählt aus Partial Least Square Regression, Hauptkomponentenanalyse oder multipler Regression, verwendet.

**9.** Verfahren nach einem der vorangehenden Ansprüche, wobei das Modell von Schritt b) angewendet wird, um Flüssigkeits- oder Lösungsspezies über einen beschränkten Konzentrationsbereich oder über einen spezifischen Bayer-Flüssigkeitstyp zu korrelieren.

**10.** Verfahren nach einem der Ansprüche 1 bis 9, das Fourier-Transform-Infrarotspektroskopie (FTIR) zur Messung der Infrarottransmissionsintensitäten umfasst.

**11.** Verfahren nach Anspruch 10, wobei die FTIR, die verwendet wird, FTIR-abgeschwächte Totalreflektion (FTIR-ATR) ist, die eine Diamantkristall-ATR-Anbringung verwendet, um die Infrarottransmissionsfrequenzen zu messen.

**12.** Verfahren nach einem der vorangehenden Ansprüche, wobei ein zusätzlicher Parameter oder mehrere zusätzliche Parameter, ausgewählt aus der Gruppe, bestehend aus Temperatur, Leitfähigkeit, Viskosität, Brechungsindex, Lichtabsorption oder Schalldämpfung der Lösung oder Flüssigkeit verwendet werden, um eine Bestimmung von Konzentrationen der chemischen Spezies zu unterstützen.

**13.** Verfahren nach einem der vorangehenden Ansprüche, wobei das Verfahren auf Online-Verarbeitung angewendet wird.

**14.** Verfahren nach Anspruch 13, wobei der Teil an Lösung oder Flüssigkeit aus einem Hauptverfahrens-Bayer-Flüssigkeitsstrom gepumpt wird, vor einer quantitativen Bestimmung der oder jeder chemischen Spezies gekühlt und geklärt wird.

**15.** Verfahren nach Anspruch 14, wobei die Analyse einen fixierten FTIR-ATR-Kristall mit einem automatischen Karussell und ein mobiles Probenabgabe- und -reinigungssystem verwendet.

**16.** System zur quantitativen Messung einer Konzentration wenigstens einer chemischen Spezies, die in einer Probe kaustischer Aluminatlösung vorliegt, **gekennzeichnet durch**

a) Mittel zur Messung der Infrarottransmissions- oder -absorptionsintensitäten bei vier oder mehr Frequenzen im Bereich von etwa 400 cm$^{-1}$ bis 6000 cm$^{-1}$ für einen Bereich von Referenz-Bayer-Flüssigkeiten oder für einen Bereich kaustischer Aluminatlösungen, die eine bekannte Zusammensetzung der wenigstens einen chemischen Spezies haben;
b) Mikroprozessor, der mit einem statistischen Modell programmiert ist, das die gemessenen Intensitäten bei den vier oder mehr Frequenzen mit der Konzentration der wenigstens einen chemischen Spezies in den Referenz-Bayer-Flüssigkeiten oder kaustischen Aluminatlösungen korreliert;

c) Mittel zur Messung der Infrarottransmissions- oder -absorptionsintensitäten bei vier oder mehr Frequenzen im Bereich von etwa 400 cm$^{-1}$ bis 6000 cm$^{-1}$ für die Probe der Bayer-Flüssigkeit oder der kaustischen Aluminatlösung und

d) Mittel zur Berechnung der Konzentration der wenigstens einen chemischen Spezies in der Probe der Bayer-Flüssigkeit oder der kaustischen Aluminatlösung aus den gemessenen Infrarotintensitäten unter Verwendung des genannten Modells.

**17.** Verfahren zur Steuerung eines Bayer-Verfahrens, in dem die Konzentration wenigstens einer chemischen Spezies unter Verwendung des Verfahrens nach einem der Ansprüche 1 bis 16 oder des Systems nach Anspruch 16 gemessen wird, wobei die Konzentration als Kontrollparameter für das Bayer-Verfahren eingesetzt wird.

**Revendications**

**1.** Procédé permettant la mesure quantitative de la concentration d'au moins une espèce chimique présente dans un échantillon de solution caustique d'aluminate, lequel procédé est **caractérisé en ce qu'**il comporte les étapes suivantes :

a) mesurer les intensités d'absorption ou de transmission infrarouge à quatre fréquences ou plus, situées dans l'intervalle allant à peu près de 400 à 6000 cm$^{-1}$, pour une série de liqueurs Bayer de référence ou pour une série de solutions caustiques d'aluminate de composition connue quant à ladite espèce chimique au nombre d'au moins une ;

b) élaborer un modèle qui permet de corréler les intensités mesurées aux quatre fréquences ou plus avec la concentration de ladite espèce chimique au nombre d'au moins une dans les liqueurs Bayer de référence ou les solutions caustiques d'aluminate ;

c) mesurer les intensités d'absorption ou de transmission infrarouge à quatre fréquences ou plus, situées dans l'intervalle allant à peu près de 400 à 6000 cm$^{-1}$, pour l'échantillon de liqueur Bayer ou de solution caustique d'aluminate ;

d) et calculer la concentration de ladite espèce chimique au nombre d'au moins une dans l'échantillon de liqueur Bayer ou de solution caustique d'aluminate, à partir des intensités infrarouge mesurées dans l'étape (c), en utilisant le modèle élaboré dans l'étape (b).

**2.** Procédé conforme à la revendication 1, dans lequel ladite espèce chimique au nombre d'au moins une est choisie dans l'ensemble formé par les suivantes : aluminate, hydroxyde, carbonate, métal alcalin, silice, phosphate, chlorure, sulfate, et carbone organique total.

**3.** Procédé conforme à la revendication 1 ou 2, dans lequel on calcule la corrélation des intensités mesurées avec la concentration de ladite espèce chimique au nombre d'au moins une dans une liqueur ou une solution de référence en utilisant un taux de variation des intensités ou des aires intégrées dans au moins quatre régions de longueur d'onde infrarouge de longueurs d'onde prédéterminées.

**4.** Procédé conforme à la revendication 3, dans lequel les longueurs d'onde prédéterminées sont choisies parmi les longueurs d'onde, à 11 cm$^{-1}$ près, de l'une ou plusieurs des régions spectrales suivantes (cm$^{-1}$) : 588, 602, 650, 680, 700, 710, 715, 720, 730, 740, 757, 763, 775, 790, 867, 884, 890, 910, 950, 1014, 1040, 1053, 1072, 1100, 1131, 1160, 1190, 1330, 1350, 1382, 1390, 1400, 1433, 1470, 1535, 1550, 1560, 1570, 1580, 1602, 1628, 1654, 1950, 1969, 2028, 2050, 2125, 2158, 2265, 2283, 2650, 2830, 2900, 2920, 3000, 3123, 3143, 3150, 3155, 3250, 3350, 3425, 3750, et 5350 cm$^{-1}$.

**5.** Procédé conforme à l'une des revendications 2 à 4, dans lequel on évalue un ou plusieurs ensembles d'espèces comme dans l'étape (b), en utilisant les intensités mesurées à des longueurs d'onde supplémentaires choisies parmi 640, 1315, 1700, 2713, 2953, 3277 et 3400 cm$^{-1}$.

**6.** Procédé conforme à l'une des revendications 2 à 5, dans lequel les intensités infrarouge ou leurs taux de variation sont mesurés dans des régions d'absorption infrarouge caractéristiques de ladite espèce chimique au nombre d'au moins une et dans plusieurs régions de longueurs d'onde qui ne font pas partie des principales régions d'absorption infrarouge caractéristiques de ladite espèce chimique au nombre d'au moins une.

**7.** Procédé conforme à l'une des revendications 1 à 6, dans lequel le modèle qui permet de corréler les intensités mesurées avec la concentration de ladite espèce chimique au nombre d'au moins une est un modèle statistique.

**8.** Procédé conforme à la revendication 7, dans lequel le modèle est un modèle à multiples variables et fait appel à une ou plusieurs technique(s) statistique(s) choisie(s) parmi la régression partielle aux moindres carrés, l'analyse de composantes principales ou la régression multiple.

**9.** Procédé conforme à l'une des revendications précédentes, dans lequel on applique le modèle de l'étape (b) pour corréler les espèces de la liqueur ou de la solution sur un intervalle restreint de concentration ou sur un type particulier de liqueur Bayer.

**10.** Procédé conforme à l'une des revendications 1 à 9, comportant le recours à la spectroscopie infrarouge à transformée de Fourier (FTIR) pour mesurer les intensités de transmission infrarouge.

**11.** Procédé conforme à la revendication 10, dans lequel la technique de FTIR est la FTIR en réflexion totale atténuée (FTIR-ATR), avec platine ATR cristal diamant pour mesurer les fréquences de transmission infrarouge.

**12.** Procédé conforme à l'une des revendications précédentes, dans lequel on utilise un ou plusieurs paramètre(s) supplémentaire(s), choisi(s) dans l'ensemble constitué par les température, conductivité, viscosité, indice de réfraction, absorption de lumière et atténuation du son, de la solution ou de la liqueur, comme aide(s) à la détermination des concentrations des espèces chimiques.

**13.** Procédé conforme à l'une des revendications précédentes, lequel procédé est mis en oeuvre en ligne.

**14.** Procédé conforme à la revendication 13, dans lequel on prélève par pompage, dans un courant principal de procédé de liqueur Bayer, un échantillon de solution ou de liqueur que l'on fait refroidir et que l'on clarifie avant d'effectuer la détermination de la quantité de l'espèce chimique ou de chaque espèce chimique.

**15.** Procédé conforme à la revendication 14, dans lequel on utilise pour l'analyse un cristal de FTIR-ATR fixé, avec un carrousel automatisé, et un système mobile d'amenée d'échantillons et de nettoyage.

**16.** Système de mesure quantitative de la concentration d'au moins une espèce chimique présente dans un échantillon de solution caustique d'aluminate, **caractérisé en ce qu'**il comporte :

a) des moyens permettant de mesurer les intensités d'absorption ou de transmission infrarouge à quatre fréquences ou plus, situées dans l'intervalle allant à peu près de 400 à 6000 cm$^{-1}$, pour une série de liqueurs Bayer de référence ou pour une série de solutions caustiques d'aluminate de composition connue quant à ladite espèce chimique au nombre d'au moins une ;
b) un microprocesseur programmé avec un modèle statistique qui permet de corréler les intensités mesurées aux quatre fréquences ou plus avec la concentration de ladite espèce chimique au nombre d'au moins une dans les liqueurs Bayer de référence ou les solutions caustiques d'aluminate ;
c) des moyens permettant de mesurer les intensités d'absorption ou de transmission infrarouge à quatre fréquences ou plus, situées dans l'intervalle allant à peu près de 400 à 6000 cm$^{-1}$, pour l'échantillon de liqueur Bayer ou de solution caustique d'aluminate ;
d) et des moyens permettant de calculer la concentration de ladite espèce chimique au nombre d'au moins une dans l'échantillon de liqueur Bayer ou de solution caustique d'aluminate, à partir des intensités infrarouge mesurées, en utilisant ledit modèle.

**17.** Procédé de régulation d'un procédé Bayer, dans lequel on mesure la concentration d'au moins une espèce chimique en suivant un procédé conforme à l'une des revendications 1 à 15 ou en utilisant un système conforme à la revendication 16, et l'on utilise cette concentration comme paramètre de régulation pour le procédé Bayer.

Figure 1: Sodium hydroxide solutions with concentration ranging from 0 to 252 g/L (expressed as $Na_2CO_3$

Figure 2: Aluminate concentrations ranging from 0 to 150 g/L (as $Al_2O_3$) in 252 g/L NaOH (as $Na_2CO_3$)

Figure 3: Sodium carbonate concentrations ranging from 0 to 98 g/L in 252 g/L NaOH (as Na2CO3)

Figure 4: Sodium sulfate concentrations ranging from 0 to 99 g/L in 252 g/L NaOH (as Na2CO3)

17

Figure 5: Comparison of a synthetic liquor with (black trace) and without (grey trace) the addition of various organics. Organics included oxalate, acetate, succinate, formate and malonate.

Figure 6: Effect of NaCl on a synthetic liquor spectrum at 20 g/L (grey trace) and 40 g/L (black trace). Synthetic liquor spectrum overlaid (lower trace) for comparison.

Figure 7: Effect of NaCl at 40 g/L (black trace) on the FTIR-ATR spectrum of a caustic solution (C/TC value of 250 g/L, grey trace).

Figure 8: FTIR-ATR spectrum of a Bayer liquor (liquor courtesy of Worsley Alumina)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2005001029 W, Dooley

- US 5378320 A, Leclerc

**Non-patent literature cited in the description**

- **G.E.P. BOX ; W.G. HUNTER ; J.S. HUNTER.** Statistics for Experimenters. Wiley, 1978